# EUROPÄISCHE PATENTSCHRIFT

(11) **EP 1 517 388 B1**
(45) Veröffentlichungstag und Bekanntmachung des Hinweises auf die Patenterteilung: **27.12.2006**
(21) Anmeldenummer: 04018244.6
(22) Anmeldetag: 02.08.2004
(51) Int. Cl.: H01M 8/02, H01M 8/24, B29C 45/14

(54) **Verfahren zur Herstellung von Bipolarplatten für Brennstoffzellen- oder Elektrolyseur-Stapel, sowie Bipolarplatte**
Method for producing bipolar plates for fuel cell stacks and electrolyzer stacks, and bipolar plate
Méthode de fabrication de plaques bipolaires pour empilements de pile à combustible et d'électrolyseur et plaque bipolaire

(30) Priorität: 17.09.2003 DE 10343267
(43) Veröffentlichungstag der Anmeldung: 23.03.2005
(73) Patentinhaber: Hüttenberger Produktionstechnik Martin GmbH, 35428 Langgöns (DE)
(72) Erfinder: Martin, Johann, Dipl.-Ing., 35606 Solms (DE)
(74) Vertreter: Knefel, Cordula

(56) Entgegenhaltungen:
- EP-A- 1 035 608
- DE-A- 10 112 394
- FR-A- 2 810 795
- US-A- 6 071 635
- US-A- 6 096 450

## Beschreibung

Die Erfindung betrifft ein Verfahren zur Herstellung von Bipolar- oder Elektrodenplatten für Brennstoffzellen oder Elektrolyseur-Stapel, ein Verfahren zur Herstellung eines Stapels von Bipolar- oder Elektrodenplatten sowie eine Bipolar- oder Elektrodenplatte.

Bipolar- oder Elektrodenplatten für Brennstoffzellenstapel werden zum Erzeugen von Strom und Wärme oder für Elektrolyseur-Stapel zum Erzeugen von Wasserstoff und Sauerstoff verwendet. Wegen des grundsätzlich gleichen Aufbaus wird im Folgenden nur noch von einer Brennstoffzelle die Rede sein. Es ist gleichermaßen jedoch ein Elektrolyseur-Stapel gemeint.

Eine wesentliche Behinderung für den stärkeren Einsatz von Brennstoffzellen (Membranbrennstoffzelle (PEM - Proton Exchange Membrane) oder Direct Methanol Brennstoffzelle (DMFC - Direct Methanol Fuel Cell)) ist die aufwändige und komplizierte Herstellung der aus Bipolarplatten aufgebauten Brennstoffzellenstapel.

Gemäß dem Stand der Technik werden zur Zeit Bipolarplatten aus Metall oder Graphit eingesetzt. Die Öffnungen und Kanäle für die Einleitung und Verteilung der Reaktionsmittel und des Kühlmittels werden durch kostenintensive Verfahren hergestellt.

Zum Stand der Technik gehören auch Pressverfahren zur Herstellung strukturierter Bipolarplatten mit anschließender Nachbearbeitung.

Für das Spritzgießen gibt es Mischungen aus Graphit und Kunststoff (Composit). Dabei werden die Kanalstruktur und die Durchbrüche für die Gaszuführungen komplett gespritzt.

Das Spritzgießen mit diesen Graphit-Kunststoffmischungen hat den Nachteil, dass diese Mischungen relativ zähflüssig sind und damit kleine Strukturen kaum oder gar nicht gespritzt werden können.

Zum Stand der Technik gehören auch Bipolarplatten, die lediglich aus Metallblech hergestellt sind. Das Abdichten erfolgt mit Flachdichtungen oder angespritzten Dichtungen.

Zum Stand der Technik (US 6,071,635 A) gehört eine Separatorenplatte, die eine leitfähige Metallplatte enthält. Gemäß diesem Stand der Technik wird die Leiterbahn, im Querschnitt gesehen, in eine wellenförmige Form gebracht, um Kanalabschnitte zu bilden. Diese zum Stand der Technik gehörende Separatorenplatte hat den Nachteil, dass in einem ersten Verfahrensschritt die Leiterbahn umgeformt werden muss und in einem zweiten Verfahrensschritt die umgeformte Leiterplatte in einem Spritzgusswerkzeug derart angeordnet werden muss, dass diese präzise mit einem Kunststoff umspritzt werden kann. Dieses zum Stand der Technik gehörende Herstellungsverfahren ist relativ aufwändig.

Weiterhin gehört zum Stand der Technik (US 6,096,450 A) eine Bipolarplatte mit einer Eisenfolie als Sperrschicht und einer darauf beidseitig aufgespritzten Gasverteilungsstruktur. Auch diese zum Stand der Technik gehörende Bipolarplatte ist relativ aufwändig in ihrer Herstellung.

Weiterhin gehört zum Stand der Technik (FR 2 810 795 A1) eine Bipolarplatte für eine Brennstoffzelle, die zwei Metallplatten aufweist. Auch diese Bipolarplatte ist in ihrer Herstellung relativ aufwändig.

Sämtliche zum Stand der Technik gehörenden Bipolarplatten haben den Nachteil, dass diese sehr aufwändig und teuer in der Herstellung sind. Darüber hinaus können insbesondere kleine Strukturen für kleinräumige Brennstoffzellen nicht oder nicht ohne weiteres hergestellt werden.

Das der Erfindung zugrunde liegende technische Problem besteht darin, ein Verfahren zur Herstellung von Bipolar-oder Elektrodenplatten für Brennstoffzellen oder Elektrolyseur-Stapel, ein Verfahren zur Herstellung eines Stapels von Bipolar- oder Elektrodenplatten sowie eine Bipolar-oder Elektrodenplatte anzugeben, die äußerst günstig in der Herstellung sind und darüber hinaus in räumlich kleinen Abmessungen herstellbar sind.

Dieses technische Problem wird durch ein Verfahren mit den Merkmalen des Anspruches 1 und durch eine Bipolar- oder Elektrodenplatte mit den Merkmalen gemäß Anspruch 13 gelöst.

Dadurch, dass gemäß dem erfindungsgemäßen Verfahren zur Herstellung von Bipolar- oder Elektrodenplatten für Brennstoffzellen oder Elektrolyseur-Stapel die Bipolar-oder Elektrodenplatte wenigstens ein Stanzband und/oder wenigstens eine Platine aufweist, die aus einem flächigen Material eines leitfähigen und korrosionsbeständigen Metalles gestanzt wird, ist es möglich, im Bereich der Kanäle (Flow-Field) die erforderlichen Streifen ohne Abfall mit hoher Präzision aus dem flächigen Material herzustellen. Dabei werden die Kontaktflächen zu den Anoden beziehungsweise Kathoden wechselweise nach beiden Seiten aus der ursprünglichen Ebene verschoben.

Unter flächigem Material werden Platinen, Streifen oder Bandmaterial verstanden. Der Einfachheit halber werden die nachfolgenden Ausführungen in Bezug auf Bandmaterial erfolgen. Es ist jedoch gleichermaßen die Ausführung von Platinen und Streifen gemeint.

In einem weiteren Verfahrensschritt wird das wenigstens eine Stanzband und/oder die wenigstens eine Platine wenigstens teilweise mit Kunststoff umspritzt. Die Kunststoffumspritzung erfolgt derart, dass mit dem Kunststoff zwischen den gestanzten Leiterbahnen Kanäle für die Durchführung von Reaktionsmitteln ausgebildet werden.

Die Metallstreifen werden lediglich teilweise umspritzt, derart, dass die Metallstreifen bei Anordnung der Bipolar- oder Elektrodenplatte in unmittelbarem Kontakt zu einer Gasdiffusionsschicht einer Membran anordbar sind.

Das Bandmaterial wird in einem ersten Verfahrensschritt vorteilhaft streifenförmig eingeschnitten. Anschließend werden die Streifen aus einer Mittellage herausgeschoben, und anschließend wird der Spritzvorgang durchgeführt.

Für eine leichtere Handhabung der Streifen werden die Streifen während des Stanzvorganges lediglich teilweise eingeschnitten und/oder es werden Verbindungsstege ausgebildet, so dass das Bandmaterial mit den Streifen ein zusammenhängendes Gebilde ergibt. Dieses Gebilde kann nach dem Stanzvorgang und vor dem Spritzvorgang beispielsweise einer Oberflächenbehandlung unterzogen werden. Es ist hierbei möglich, zum Beispiel eine partielle oder vollflächige Vergoldung der Oberfläche vorzunehmen, um mit der Brennstoffzelle höhere Leistungen zu erzielen.

Während des Spritzvorganges werden die Streifen in ihre Endposition verschoben und dort teilweise umspritzt, so dass sie in dem Kunststoff, der gleichzeitig die Kanäle für die Reaktionsmittel ausbildet, eine feste Position erhalten.

Die Streifen werden in dem Spritzwerkzeug entweder durch den Spritzdruck an die Ober- und Unterseite des Spritzwerkzeuges gedrückt oder es ist auch möglich, eine entsprechende Bewegung der Spritzwerkzeugeinsätze während des Spritzvorganges auszuführen. Hierbei kann im ersten Schritt ein Andrücken der Metallstreifen an die den Spritzraum begrenzenden Flächen der Spritzwerkzeugeinsätze, welche kammartig ausgebildet sind, vorgenommen werden.

Hierdurch ist es möglich, eine sehr dünne Kunststoffschicht auf den Metallstreifen aufzubringen. Beispielsweise sind Dicken von 2/10 oder 3/10 Millimetern denkbar.

Der besondere Vorteil des erfindungsgemäßen Verfahrens liegt darin, dass die Elektrodenplatte als fertige Platte mit vor- oder fertiggeformten Kanälen zur Führung der Reaktionsmittel ausgebildet wird.

Aus diesen Bipolar- oder Elektrodenplatten lässt sich in einfacher Art und Weise ein Stapel herstellen, indem zur Stapelbildung die miteinander verbundenen Platten durch jeweils 180°-Biegungen aufeinander gestapelt werden. Zwischen den Platten wird eine wenigstens eine Gasdiffusionsschicht tragende Membran angeordnet.

Der Verlauf der Kanäle in einem Flow-Field wird vorteilhaft zwischen den gegenüberliegenden Plattenebenen parallel angeordnet, so dass jeweils zwei sich gegenüberliegende, aus dem Bandmaterial gebildete und mit Kunststoff teilweise umspritzte Stanzbahnen oder Platinen mit Druck auf beiden Seiten der die Gasdiffusionsschicht tragenden Membran anliegend angeordnet werden.

Die hergestellten Platten (Stanzbahnen oder Platinen mit Kunststoff umspritzt) werden mit einem gewissen Kontaktdruck an die Membran und an die Gasdiffusionsschichten gedrückt. Die Gasdiffusionsschicht soll beispielsweise um circa 40 % zusammengedrückt werden. Die Erfindung zeichnet sich dadurch aus, dass die Elektrodenplatten sehr präzise hergestellt werden können, das heißt mit einer Genauigkeit von besser als 5/100 Millimetern. Hierdurch ist es wiederum möglich, den geforderten Druck sehr gleichmäßig aufzubringen.

Dieser Druck muss relativ exakt erreicht werden. Ist der Druck zu gering, ist der Übergangswiderstand zu groß. Ist der Druck zu hoch, können keine Gase durch die Gasdiffusionsschicht diffundieren, so dass man eine Drosselung erhält.

Vorteilhaft wird ein Kunststoffrahmen mit Dichtung (2K-Technik) an das wenigstens eine Stanzband und/oder die wenigstens eine Platine angespritzt. Durch den Kunststoffrahmen mit angespritzter Dichtung wird erreicht, dass die Brennstoffzelle gasdicht ist.

Ragen Metallplatten aus dem Kunststoffrahmen heraus, kann die Brennstoffzelle auch beispielsweise in einem Wärmetauschersystem, zum Beispiel einem Warmwasserspeicher einer Heizung eines Hauses angeordnet werden. Das Kühlmedium des Wärmetauschersystems wird hierdurch unmittelbar aufgewärmt, da in der Brennstoffzelle die Energie etwa zu 50 % in Strom und zu 50 % in Wärme umgesetzt wird. Überschüssige Wärme kann auf diese Art und Weise vorteilhaft abgeführt werden. In dem Wärmetauschersystem ist vorteilhaft Luft oder ein elektrisch nicht leitfähiges Kühlmedium (zum Beispiel Glykol) vorgesehen.

Ein Abführen der Wärme ist auf diese Art und Weise auch bei anderen Anwendungen, beispielsweise über einen Ventilator möglich.

Je nach Art der Faltung der Bipolar- oder Elektrodenplatten ist es möglich, die Bipolar- oder Elektrodenplatten in dem Stapel in elektrischer Reihen- und/oder Parallelschaltung anzuordnen.

In einem Stapel werden mehrere Bipolarplatten oder mehrere Elektrodenplatten mit einer zwischenliegenden Membran, die wiederum Gasdiffusionsschichten trägt, übereinander liegend angeordnet.

Vorteilhaft wird ein Stapel durch Aneinanderreihen gleicher Abschnitte aufgebaut, wobei ein Abschnitt einer Elektrodenplatte Verteilerkanäle sowie Anschlüsse für die Reaktionsmittel und eine Membran-Elektroden-Einheit (MEA) aufweist. Die Membran-Elektroden-Einheit eines ersten Abschnittes bildet die gasdichte und elektrisch isolierende, jedoch protonenleitfähige Begrenzung des zweiten Abschnittes. Die Membran-Elektroden-Einheit des zweiten Abschnittes bildet die gasdichte und elektrisch isolierende, jedoch protonenleitfähige Begrenzung des dritten Abschnittes und so weiter.

Vorteilhaft sind an beiden Enden des Elektrodenstapels Endplatten angeordnet, zwischen denen die einzelnen aneinander gereihten Abschnitte mit ihren Dichtungen eingespannt sind. Die Endplatten weisen vorteilhaft Anschlüsse für das Zu- und Abführen der Reaktionsmittel auf.

Die erfindungsgemäße Bipolar- oder Elektrodenplatte zeichnet sich dadurch aus, dass sie wenigstens ein Stanzstreifenband und/oder wenigstens eine Platine aufweist, die aus Streifen aus gestanztem Bandmaterial eines leitfähigen und korrosionsbeständigen Materials besteht. Gemäß einer bevorzugten Ausführungsform wird Edelstahl oder Kupfer mit einer Korrosionsschutzschicht verwendet.

Wird Edelstahl verwendet, so kann dieses Material beispielsweise vergoldet sein. Es ist auch möglich, einen Edelstahl zu verwenden, der nicht vergoldet und auch in keiner anderen Weise oberflächenbeschichtet ist.

Die Metallstreifen, die wechselweise nach beiden Seiten aus des ursprünglichen Ebene verschoben ausgebildet sind, sind teilweise mit Kunststoff umspritzt, wobei durch den Kunststoff Kanäle für die Reaktionsmittel ausgebildet sind. Die Stanzbänder oder Platinen sind derart mit dem Kunststoff umspritzt, dass sie unmittelbar an einer Gasdiffusionsschicht der Membran anliegend angeordnet werden können. Die Ausbildung der Kunststoffkanäle ist vorteilhaft so gewählt, dass das Gas nicht unmittelbar mit den Metallplatten in Berührung kommt. Die Metallplatten liegen entweder an der Gasdiffusionsschicht an oder sind mit Kunststoff umspritzt. Dadurch, dass die Kanäle vollständig mit Kunststoff abgedichtet sind beziehungsweise zu der offenen Seite hin durch die Membran mit den Gasdiffusionsschichten begrenzt sind, kann kein Kurzschluss auftreten.

Vorteilhaft wird ein Hochtemperaturkunststoff verwendet. Es ist beispielsweise möglich, Polyphenylensulfid (PPS) zu verwenden. Durch die Verwendung eines Hochtemperaturkunststoffes, der beispielsweise dauerhaft Temperaturen von 180 °C bis 260 °C aushält, ist ein vorteilhaftes Einsatzgebiet der Brennstoffzelle eine Heizungsanlage.

Gemäß einer weiteren bevorzugten Ausführungsform sind die Metallstreifen als oberflächenbehandelte Metallstreifen ausgebildet. Vorteilhaft sind die Metallstreifen vergoldet. Hierdurch erreicht man eine höhere Leistung der Brennstoffzelle. Die Oberflächenbehandlung kann zum Beispiel in Form einer galvanischen Beschichtung durchgeführt werden. Diese wird vorteilhaft nach dem Stanzvorgang durchgeführt. Dadurch, dass die Streifen nach dem Stanzvorgang noch zusammenhängen, erhält man den Vorteil, dass alle Streifen zusammenhängend in einem Arbeitsgang oberflächenbehandelt werden können, wodurch sich die Kosten für die Herstellung der Brennstoffzelle wiederum erheblich verringern.

Durch das Stanzen der Metallleiter ist es möglich, diese sehr schmal auszubilden (bis circa einen Millimeter), so dass sehr kleine und dennoch leistungsfähige Brennstoffzellen für kleine Geräte, beispielsweise für Laptops, Fotoapparate, Camcorder oder auch für stationäre Anwendungen, zum Beispiel Camping, Wohnmobile sowie Notstromaggregate (USV) hergestellt werden können.

Das erfindungsgemäße Herstellungsverfahren zeichnet sich durch folgende Vorteile aus:
1. Die Leiterbahnen werden aus einem Blech komplett und ohne Abfall gebildet,
2. die Leiterbahnen werden abwechselnd nach beiden Seiten der Platine oder des Stanzbandes verschoben und dort durch teilweises Umspritzen mit Kunststoff in ihrer Lage fixiert,
3. die Spritzwerkzeugeinsätze, welche kammförmig ausgebildet sind, bilden gleichzeitig die Hohlräume, die später die Kanäle für das Gas bilden,
4. die Metallleiter werden beim Spritzvorgang in die endgültige Position gedrückt.

Hierdurch ist es möglich, in einem relativ preiswerten Verfahren Bipolar- oder Elektrodenplatten auszubilden.

Die durch den Kunststoff ausgebildeten Kanäle haben den Vorteil, dass diese völlig glatt ausgebildet sind. Dies ist ein weiterer erheblicher Vorteil gegenüber dem Stand der Technik.

Durch die Faltung der einzelnen Plattenpaare ist eine elektrische Reihenschaltung wie auch eine Parallelschaltung möglich. Bei der Reihenschaltung wird eine Verkettung der Streifen über die Metallleiter vorgenommen. Dies hat den Vorteil, dass nicht gesonderte Kontakte notwendig sind. Ein einzelnes Plattenpaar mit einer zwischen den Platten angeordneten Membran stellt ein so genanntes Grundelement dar. Diese Grundelemente können parallel geschaltet werden. Das heißt, die Paare sind jeweils einzeln in dem Stack angeordnet. Jedes Paar von Platten ist über eine Leiterbahn, die bei der Herstellung der Platten als Verbindung erhalten bleibt, miteinander verbunden.

Bei der Reihenschaltung werden mehrere zusammenhängende Paare übereinander gestapelt. Auch hierbei ist die Verbindung durch die ohnehin vorhandenen Leiterbahnen gegeben. Es sind keine zusätzlichen Steckkontakte notwendig.

Die Parallelschaltung ist bei kleineren Zellen vorteilhaft. In diesem Fall ist der Anteil der Paare größer. Hierdurch erreicht die Brennstoffzelle eine höhere Stromstärke. Die Reihenschaltung wird vorteilhaft bei größeren Zellen angewendet. Hier erhält man eine höhere Spannung.

Besonders vorteilhaft ist eine Kombination von Reihen-und Parallelschaltung, um die für die Anwendungen erforderlichen Stromstärken und Spannungen zu erreichen.

Das Stanzband kann erfindungsgemäß als Endlosstrang gefertigt werden. Der Strang kann getrennt werden, wo es erforderlich ist. Das bedeutet, dass die Einzelpaare getrennt werden können. Beispielsweise für ein Grundelement für eine Parallelschaltung wird eine Vierergruppe getrennt. Die äußeren Paare werden gefaltet, und zwischen ihnen wird eine Membran mit Gasdiffusionsschichten angeordnet. Hierdurch erhält man ein Paar, welches ein Grundelement bildet.

Wird der Strang galvanisch behandelt, ist es vorteilhaft, diesen Strang bei circa 1,20 Meter zu trennen, da dies eine vorteilhafte Länge für eine Galvanikbehandlung ist. Ohne eine galvanische Behandlung ist eine Endlosfertigung möglich, so dass erst bei der endgültigen Montage der Strang getrennt wird, wo es erforderlich ist.

Zwei Stapel, die aus einer Reihenschaltung von Elektroden bestehen, können beispielsweise parallel geschaltet werden, indem die beiden gleichen Pole miteinander verbunden werden. Das bedeutet, dass durch die Faltung die Reihen- und Parallelschaltung sowie die Kombination in einfachster Weise realisierbar ist.

Beim Einsatz von Bipolarplatten wird der Strom innerhalb einer Platte direkt von den oberen zu den unteren Leiterbahnen geführt.

Durch die außen angespritzte Dichtung wird bewirkt, dass die Zelle nach außen gasdicht ist. In gleichem Maße ist sie natürlich auch nach innen dicht.

Der Rahmen wird vorteilhaft mit Dichtung (2K-Technik) angespritzt. Es besteht gemäß der Erfindung jedoch auch die Möglichkeit, als Dichtung eine Flachdichtung zu verwenden.

Bei der angespritzten Dichtung ist darauf zu achten, dass diese beim Zusammenbau des Stacks nicht einem zu hohen Druck ausgesetzt wird. Die Dichtung darf lediglich einem bestimmten Druck ausgesetzt werden, da ansonsten die Dichtung wegfließen würde. Das bedeutet, dass die Dichtung in diesem Falle ihre Dichteigenschaften verlieren würde. Die Dichtung wird erst beim zweiten Spritzvorgang ausgebildet. Beim ersten Spritzvorgang werden die beiden Teile eines Paares, das heißt die Platinen eines Paares getrennt umspritzt.

Gemäß dem erfindungsgemäßen Verfahren wird die Dichtung nur auf das Maß gedrückt, wie die Distanzhalter des Kunststoffrahmens es erlauben. Man erhält also ein definiertes Zusammendrücken der Dichtung, so dass die Dichtung nicht einem zu hohen Druck ausgesetzt wird und dadurch nicht wegfließt. Durch den definierten Druck weist die Dichtung eine entsprechende Langlebigkeit auf. Es ist gemäß der Erfindung also eine Höhenreferenz für die Dichtung vorgesehen.

Zusätzlich kann noch eine Lagereferenz vorgesehen sein. Die Lagereferenz wird über angespritzte Vorsprünge, die in an Nachbarplatten angespritzte Ausnehmungen nach der Montage greifen, erreicht.

Vorteilhaft wird ein Kunststoff verwendet, der eine gewisse Haftung an dem Metall aufweist. Der Kunststoff weist hierfür bestimmte Zusätze auf. Hierdurch ist die Dichtigkeit erhöht, so dass die Reaktionsmittel nicht beim Übergang Metall/Kunststoff entweichen können. Durch die Haftung des Kunststoffes an dem Metall wird auch erreicht, dass im Außenbereich bei überstehenden Metallplatten der Kunststoff sich nicht von den Metallplatten abhebt.

Die erfindungsgemäße Brennstoffzelle weist weiterhin folgende Vorteile auf:
1. Der Stromübergang von der Membran-Elektroden-Einheit/Gasdiffusionsschicht auf die Metallstruktur erfolgt mit geringem Übergangswiderstand,
2. die Strom- und Wärmeleitung erfolgt über gut leitendes Metall,
3. das Flow-Field und die Durchbrüche für die Gasführungen werden in Kunststoff gespritzt (Temperaturbeständigkeit > 200 °C),
4. das geringe Gewicht wird durch einen hohen Kunststoffanteil und eine niedrige Bauhöhe erreicht,
5. die Dichtung wird im gleichen Prozess mit thermoplastischem Elastomer (TPE) oder Kautschuk (zum Beispiel Ethylen/Propylen-Dien-Terpolymere (EPDM)) gespritzt.

Durch diese Kombination lässt sich die Konstruktion der Platten erheblich vereinfachen, wodurch deren wirtschaftliche Herstellung in einem Stanz-Spritzgießverfahren möglich wird.

Gemäß dem erfindungsgemäßen Herstellungsverfahren werden in einem Inline-Prozess, das heißt in einem Herstellverfahren, in dem alle Arbeitsschritte automatisiert und zeitlich und örtlich direkt hintereinander ablaufen, aus Bandmaterial gestanzt, geprägt und gegebenenfalls gebogen. Die dadurch entstandenen Stanzbänder werden in vorteilhaften Längen in Streifen belassen, die danach weitere Arbeitsgänge, wie eine eventuelle Oberflächenbehandlung, ein Umspritzen der Stanzbänder mit Kunststoff und das Spritzen der Dichtung mit thermoplastischem Elastomer durchlaufen.

Für eine gute Strom- und Wärmeleitung sowie für eine gute Korrosionsbeständigkeit werden geeignete Metalle und verschiedene Oberflächenbehandlungen eingesetzt.

Die Verbindung der Elektrodenplatten untereinander durch entsprechende Stege wird als elektrischer Leiter zwischen zwei Zellen und/oder zum Abführen der erzeugten Wärme benutzt.

Der Verlauf der Kanäle im Flow-Field ist zwischen den gegenüberliegenden Plattenebenen parallel angeordnet, und die beiden direkt gegenüberliegenden Metallkontaktstreifen drücken von beiden Seiten auf die Membran-Elektroden-Einheit/Gasdiffusionsschicht.

Der Metall-Kunststoff-Verbund der Bipolar- oder Elektrodenplatten kann auch so ausgebildet werden, dass das Blech nach außen geführt wird und die durch elektrochemische Reaktion erzeugte Wärme über ein Kühlmittel, zum Beispiel Luft, abgeführt wird (aktive und/oder passive Kühlung).

Ein weiterer Vorteil der Erfindung ist, dass die Abdichtung der Räume für die Reaktionsstoffe (zum Beispiel Wasserstoff und Sauerstoff oder Methanol) erheblich vereinfacht wird:
- Bei der Bipolarplatte sind der Brennstoff und das Oxidationsmittel durch Kunststoffwände getrennt,
- bei der Elektrodenplatte ist in jeder Einzelzelle zwischen zwei Membran-Elektroden-Einheiten nur ein Medium, nämlich Brennstoff oder Oxidationsmittel vorhanden.

Die Elektrodenplatten können beim Spritzprozess nach Bedarf durch Trennstellen sowohl als elektrische Reihenschaltung als auch Parallelschaltung miteinander kombiniert werden. Die Bipolarplatten werden bei Reihenschaltung und/oder Parallelschaltung der Membran-Elektroden-Einheit/Gasdiffusionsschicht zu einem Stapel (Stack) montiert.

Die miteinander verbundenen Elektrodenplatten werden bei der Montage mit der Membran-Elektroden-Einheit/Gasdiffusionsschicht aufeinander zu einem Stapel (Stack) gefaltet. Dadurch ist keine Verschaltung durch Verbinder notwendig. Hierdurch wird das zum Stand der Technik gehörende Problem der Kontaktkorrosion vermieden.

Weitere Merkmale und Vorteile der Erfindung ergeben sich anhand der zugehörigen Zeichnung, in der ein Ausführungsbeispiel einer erfindungsgemäßen Bipolar- oder Elektrodenplatte nur beispielhaft dargestellt ist. In der Zeichnung zeigen:
- Fig. 1: einen Längsschnitt durch einen Stapel von Bipolar- oder Elektrodenplatten;
- Fig. 2: eine Einzelheit der Fig. 1;
- Fig. 3: ein Spritzwerkzeug mit in dem Spritzwerkzeug angeordneten Metallstreifen vor dem Spritzvorgang im Querschnitt;
- Fig. 4: das Spritzwerkzeug gemäß Fig. 3 nach dem Spritzvorgang;
- Fig. 5: ein Spritzwerkzeug im Querschnitt gemäß einem geänderten Spritzverfahren;
- Fig. 6: eine Brennstoffzelle mit zwei Elektrodenplatten im Längsschnitt;
- Fig. 7: eine Brennstoffzelle mit zwei Bipolarplatten im Längsschnitt;
- Fig. 8: eine Reihenschaltung von Elektrodenplatten;
- Fig. 9: eine Parallelschaltung von Elektrodenplatten.

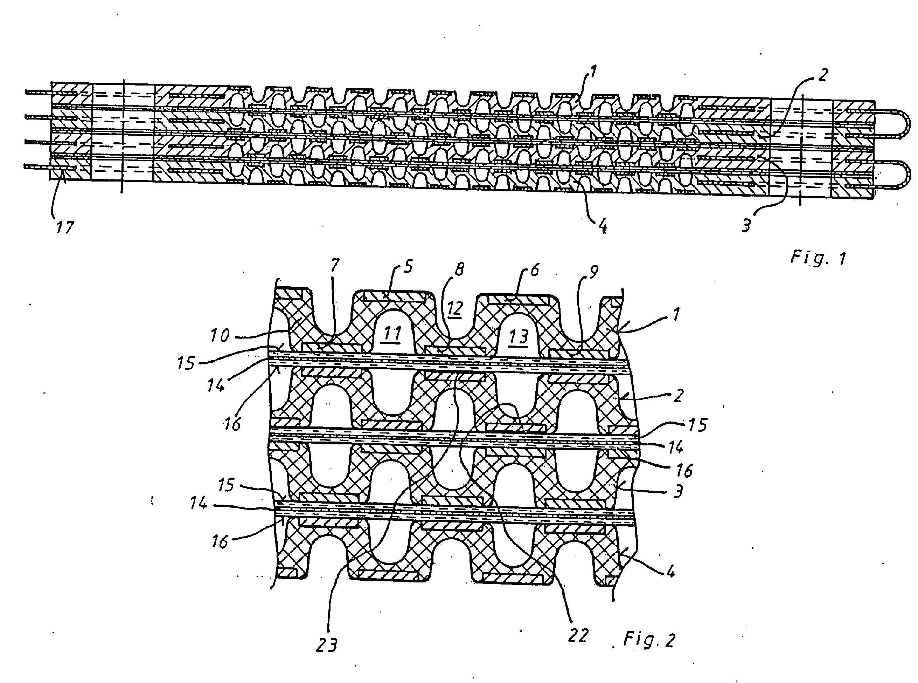

Die Fig. 1 und 2 zeigen Bipolar- oder Elektrodenplatten (1, 2, 3, 4). Die Elektrodenplatte (1) weist Metallstreifen (5 bis 9) auf, die ursprünglich aus einem Blech gestanzt worden sind. In dem Blech waren die Metallstreifen (7, 5, 8, 6, 9) nebeneinander liegend angeordnet. Mittels eines Kunststoffes (10) sind Kanäle (11, 12, 13) für das Reaktionsgas oder die Reaktionsflüssigkeit (hier nicht dargestellt) ausgebildet. Zwischen der Elektrodenplatte (1) und der Elektrodenplatte (2) ist eine Membran (14) mit Gasdiffusionsschichten (15, 16) angeordnet. Die Elektrodenplatten (1, 2) werden mit einem gewissen Kontaktdruck auf die Gasdiffusionsschichten (15, 16) gedrückt.

Die Unterscheidung in Elektroden- oder Bipolarplatten beruht darauf, wie die Führung der Reaktionsmittel in den Kanälen erfolgt. Wird zum Beispiel in den Kanälen der Platte (1), das heißt in den Kanälen (11, 12, 13) beispielsweise Wasserstoff geführt, während in den Kanälen der Platte (2) Sauerstoff geführt wird, handelt es sich um eine Elektrodenplatte.

Sind in den Kanälen abwechselnd Wasserstoff und Sauerstoff angeordnet, das heißt im Kanal (11) Wasserstoff, im Kanal (12) Sauerstoff, im Kanal (13) wiederum Wasserstoff, handelt es sich um Bipolarplatten.

In Fig. 1 ist zusätzlich eine Kühlfläche (17) dargestellt.

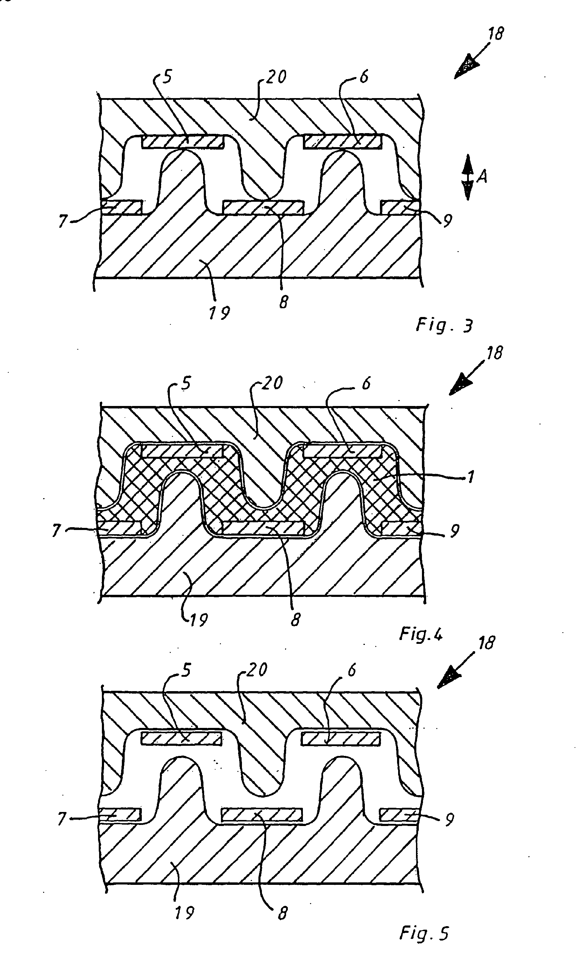

Fig. 3 zeigt ein Spritzwerkzeug (18) mit Einsätzen (19) in einem Unterteil und Einsätzen (20) in einem Oberteil. In dem Spritzwerkzeug (18) sind die Metallstreifen (5 bis 9) eingelegt. Die Metallstreifen (5, 6) werden von dem unteren Einsatz (19) des Spritzwerkzeuges (18) an den oberen Einsatz (20) des Spritzwerkzeuges (18) gedrückt, gleichermaßen werden die Metallstreifen (7, 8, 9) von dem oberen Einsatz (20) des Spritzwerkzeuges (18) an den unteren Einsatz (19) gedrückt. Während des Spritzvorganges werden der obere Einsatz (20) und der untere Einsatz (19) in Richtung des Doppelpfeiles (A) aufgefahren, so dass die in Fig. 4 dargestellte Ausbildung der Elektrodenplatte (1) entsteht.

Gemäß Fig. 5 sind die Metallstreifen (5, 6) wiederum in dem Spritzwerkzeug (18) angeordnet. Das Spritzwerkzeug (18) ist in der in Fig. 5 dargestellten Ausführungsform in der Endposition. Die Metallstreifen (5 bis 9) sind mit geringem Abstand zu dem Oberteil (20) und dem Unterteil (19) des Spritzwerkzeuges (18) in diesem angeordnet. Durch den Spritzdruck werden die Metallstreifen (5, 6) an die Oberseite (20) und die Metallstreifen (7, 8, 9) an das Unterteil (19) des Spritzwerkzeuges (18) gedrückt, so dass wiederum die in Fig. 4 dargestellte Elektrodenplatte (1) ausgebildet wird.

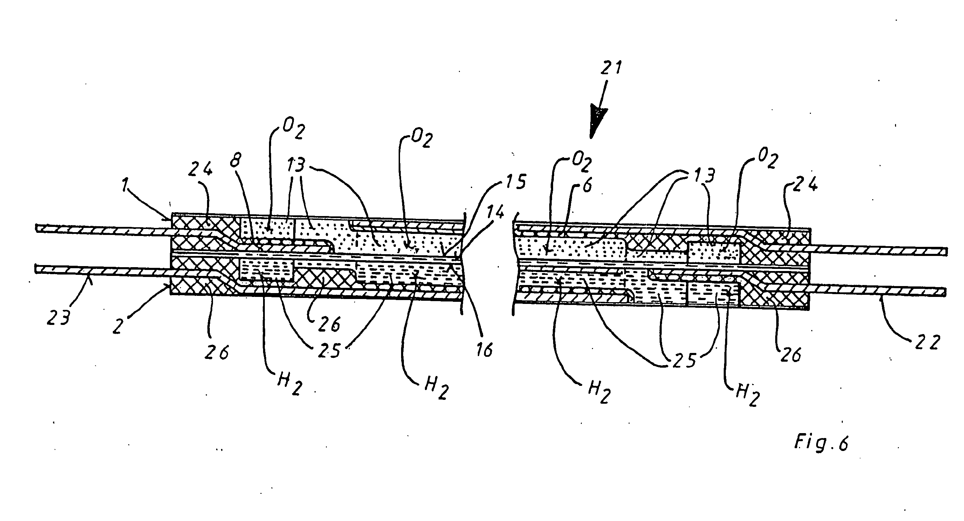

Fig. 6 zeigt eine Brennstoffzelle (21) mit zwei Elektrodenplatten (1, 2). Die Elektrodenplatte (1) weist die Metallstreifen (6, 8) auf, die als Leiterbahnen dienen. Die Elektrodenplatte (2) weist die Leiterbahnen (22, 23) auf. Im Randbereich der Brennstoffzelle (21) ist eine Kunststoffdichtung (24) angespritzt. Durch die Kanäle (13) der Elektrodenplatte (1) wird Sauerstoff (O₂) geleitet, während durch die Kanäle (25) der Elektrodenplatte (2) Wasserstoff (H₂) geleitet wird. Zwischen den Elektrodenplatten (1, 2) sind die Gasdiffusionsschichten (15, 16) mit der dazwischen liegenden Membran (14) angeordnet. Die Leiterbahn (23) ist mit Kunststoff (26) umspritzt, der gleichzeitig den Kanal (25) ausbildet.

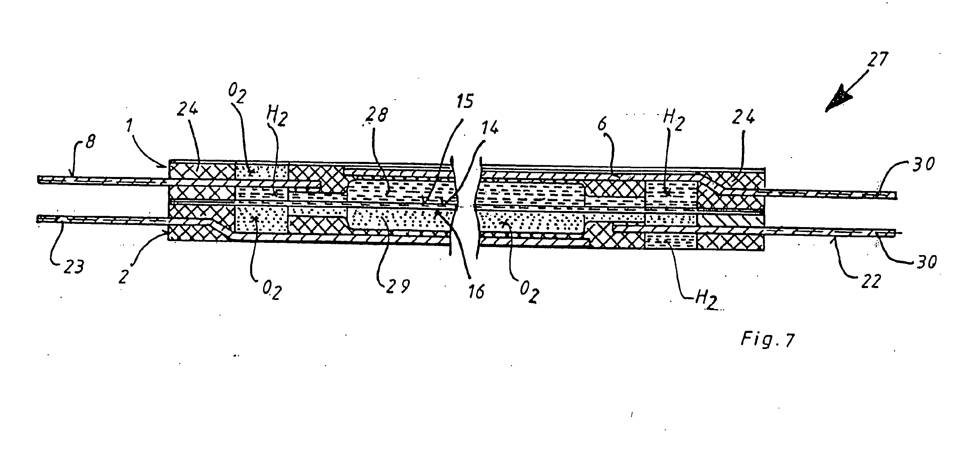

Gemäß Fig. 7 ist die Brennstoffzelle (27) gezeigt mit den Elektrodenplatten (1, 2), die wiederum Leiterbahnen (6, 8; 22, 23) aufweisen. Zwischen den Elektrodenplatten (1, 2) sind die Gasdiffusionsschichten (15, 16) mit der dazwischen liegenden Membran (14) angeordnet. Bei der in Fig. 7 dargestellten Brennstoffzelle (27) sind Kanäle (28, 29) ausgebildet. Durch den Kanal (28) wird Wasserstoff (H₂) geleitet, während durch den Kanal (29) Sauerstoff (O₂) geleitet wird. Auch die Brennstoffzelle (27) weist eine Kunststoffdichtung (24) auf. Überstehende Metallplatten (30) dienen einer Wärmeabfuhr in ein nicht leitfähiges Kühlmedium (nicht dargestellt).

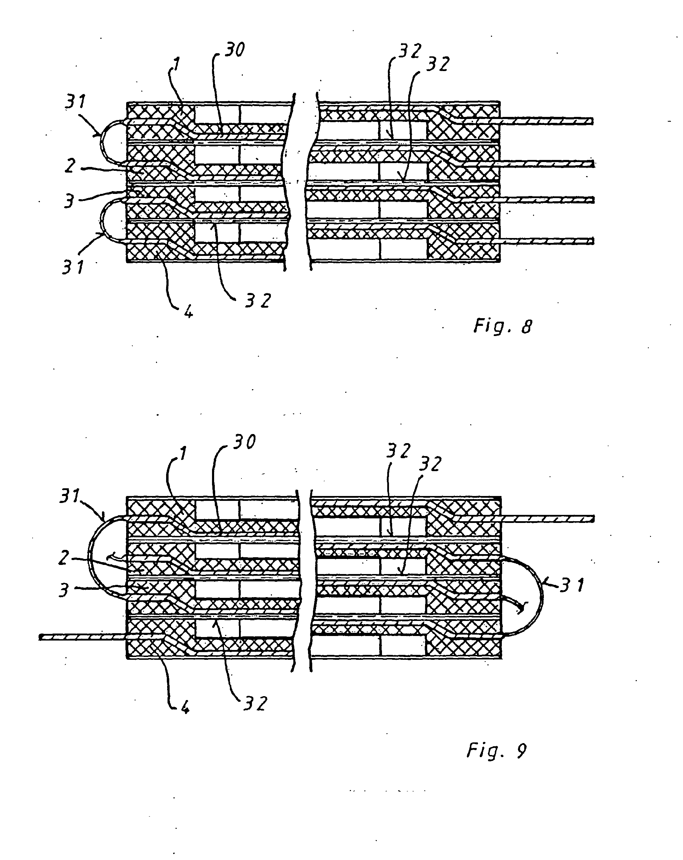

Zur grundsätzlichen Erläuterung der Reihenschaltung ist in Fig. 8 eine Reihenschaltung von Elektrodenplatten dargestellt. Die Elektrodenplatten (1, 2) bilden ein Paar wie auch die Elektrodenplatten (3, 4). Um eine Reihenschaltung zu ermöglichen, ist es erforderlich, dass die beiden Leiterbahnen (beispielsweise Kontaktflächen (5, 7) in Fig. 2) elektrisch voneinander getrennt sind. Sie haben jedoch eine elektrische Verbindung zu der nächsten Elektrodenplatte des gleichen Elektrodenpaares (1, 2) (zum Beispiel Kontaktfläche (5) mit Kontaktfläche (23) und Kontaktfläche (7) mit Kontaktfläche (22) in Fig. 2). Zwischen den Elektrodenplatten (1, 2) und den Elektrodenplatten (3, 4) wie auch zwischen den Paaren ist jeweils eine Gasdiffusionsschicht mit Membran (32) angeordnet.

Fig. 9 zeigt eine Parallelschaltung mit den Elektrodenplatten (1, 2; 3, 4) mit den jeweils dazwischen angeordneten Gasdiffusionsschichten mit Membranen (32). Für die Parallelschaltung werden die beiden Leiterbahnen (zum Beispiel Kontaktflächen (5, 7) der Fig. 2) elektrisch verbunden. Die Elektrodenplattenpaare (1, 3) sind elektrisch miteinander über den durchgehenden Blechstrang (31) verbunden, und die Elektrodenplattenpaare (2, 4) sind elektrisch über den durchgehenden Blechstrang (31) (rechts in Fig. 9 dargestellt) miteinander verbunden.

### Bezugszahlen

- 1 bis 4: Elektrodenplatten
- 5 bis 9: Metallstreifen
- 10: Kunststoff
- 11 bis 13: Kanäle
- 14: Membran
- 15, 16: Gasdiffusionsschichten
- 17: Kühlfläche
- 18: Spritzwerkzeug
- 19: Unterteil von (18)
- 20: Oberteil von (18)
- 21: Brennstoffzelle
- 22: Leiterbahn
- 23: Leiterbahn
- 24: Kunststoffdichtung
- 25: Kanal
- 26: Kunststoff
- 27: Brennstoffzelle
- 28: Kanal
- 29: Kanal
- 30: Metallplatten
- 31: Verbindung Leiterbahnen
- 32: Gasdiffusionsschicht und Membran
- A: Pfeil

## Patentansprüche

1. Verfahren zur Herstellung von Bipolar- oder Elektrodenplatten für Brennstoffzellen- oder Elektrolyseur-Stapel,
**dadurch gekennzeichnet , dass** die Bipolar- oder Elektrodenplatte wenigstens ein Stanzband und/oder wenigstens eine Platine aufweist, die aus einem flächigen Material eines leitfähigen und korrosionsbeständigen Metalles gestanzt wird mit den Verfahrensschritten:
- das flächige Material wird streifenförmig im Stanzverfahren eingeschnitten,
- die Streifen werden aus einer Mittellage herausgeschoben,
- es wird ein Spritzvorgang durchgeführt, derart, dass die Streifen durch Kunststoff gehalten werden,
- die Streifen werden während des Spritzvorganges in ihre Endposition verschoben und teilweise umspritzt.

2. Verfahren nach Anspruch 1, **dadurch gekennzeichnet, dass** das wenigstens eine Stanzband und/oder die wenigstens eine Platine mit Kunststoff umspritzt werden, derart, dass mit dem Kunststoff Kanäle für die Durchführung von Reaktionsmitteln ausgebildet werden.

3. Verfahren nach einem der vorhergehenden Ansprüche, **dadurch gekennzeichnet, dass** die Streifen während des Stanzvorganges lediglich teilweise eingeschnitten und/oder Verbindungsstege ausgebildet werden.

4. Verfahren nach einem der vorhergehenden Ansprüche, **dadurch gekennzeichnet, dass** die Streifen durch den Spritzdruck oder durch bewegliche Einsätze (19, 20) des Spritzwerkzeuges während des Spritzvorganges in ihre Endposition gebracht werden.

5. Verfahren nach einem der vorhergehenden Ansprüche, **dadurch gekennzeichnet, dass** in einem Arbeitsbereich der gestanzten Platinen oder Stanzbänder Kanäle zur Führung der Reaktionsmittel vor- oder fertiggeformt werden.

6. Verfahren nach einem der vorhergehenden Ansprüche, **dadurch gekennzeichnet, dass** nach dem Stanzvorgang und vor dem Spritzvorgang eine Oberflächenbehandlung der Platinen oder Stanzbänder durchgeführt wird.

7. Verfahren zur Herstellung eines Stapels von Bipolar- oder Elektrodenplatten nach einem der vorhergehenden Ansprüche, **dadurch gekennzeichnet, dass** zwischen den Platinen und/oder Stanzbändern wenigstens eine Gasdiffusionsschichten tragende Membran angeordnet wird.

8. Verfahren nach einem der vorhergehenden Ansprüche, **dadurch gekennzeichnet, dass** der Verlauf der Kanäle in einem Flow-Field zwischen gegenüberliegenden Plattenebenen parallel angeordnet wird, so dass jeweils zwei sich gegenüberliegende oder kreuzweise geführte, aus dem flächigen Material ausgebildete und mit Kunststoff teilweise umspritzte Metallstreifen mit Druck auf beiden Seiten der die Gasdiffusionsschicht tragenden Membran anliegend angeordnet werden.

9. Verfahren nach Anspruch 8, **dadurch gekennzeichnet, dass** ein Kunststoffrahmen mit Dichtung an die Stanzbänder und/oder Platinen angespritzt wird.

10. Verfahren nach einem der Ansprüche 7 bis 9, **dadurch gekennzeichnet, dass** die Bipolar- oder Elektrodenplatten in dem Stapel in Reihen- und/oder Parallelschaltung angeordnet werden.

11. Verfahren nach einem der Ansprüche 7 bis 10, **dadurch gekennzeichnet, dass** der Stapel durch Aneinanderreihen gleicher Abschnitte aufgebaut wird, wobei ein Abschnitt einer Elektrodenplatte Verteilerkanäle sowie Anschlüsse für die Reaktionsmittel und eine Membran-Elektroden-Einheit (MEA) aufweist, wobei die Membran-Elektroden-Einheit des n-ten Abschnittes die gasdichte und elektrisch isolierende, jedoch protonenleitfähige Begrenzung des (n+1)ten Abschnittes und die Membran-Elektroden-Einheit des (n+1) ten Abschnittes die gasdichte und elektrisch isolierende protonenleitfähige Begrenzung zum (n+2)ten Abschnitt bildet (n = ganze Zahl).

12. Verfahren nach einem der Ansprüche 7 bis 10, **dadurch gekennzeichnet, dass** an beiden Enden des Elektrodenstapels Endplatten angeordnet werden, zwischen denen die einzelnen aneinander gereihten Abschnitte mit ihren Dichtungen eingespannt sind, und die Anschlüsse für das Zu- und Abführen der Reaktionsmittel aufweisen.

13. Bipolar- oder Elektrodenplatte, **dadurch gekennzeichnet, dass** die Bipolar- oder Elektrodenplatte wenigstens ein Stanzband und/oder wenigstens eine Platine mit Streifen aus gestanztem flächigen Material eines leitfähigen und korrosionsbeständigen Metalles aufweist, wobei Kontaktflächen zu den Anoden beziehungsweise Kathoden wechselweise nach beiden Seiten aus der ursprünglichen Ebene verschoben ausgebildet sind, und dass das wenigstens eine Stanzband oder die wenigstens eine Platine wenigstens teilweise mit Kunststoff umspritzt ausgebildet ist, wobei durch den Kunststoff Kanäle für Reaktionsmittel ausgebildet sind.

14. Bipolar- oder Elektrodenplatte nach Anspruch 13, **dadurch gekennzeichnet, dass** das wenigstens eine Stanzband und/oder die wenigstens eine Platine aus Edelstahl oder Kupfer mit einer Korrosionsschutzschicht gebildet sind.

15. Bipolar- oder Elektrodenplatte nach einem der Ansprüche 13 oder 14, **dadurch gekennzeichnet, dass** die gestanzten Stanzbänder und/oder Platinen Öffnungen zur Durchführung der Reaktionsmittel aufweisen.

16. Bipolar- oder Elektrodenplatte nach einem der Ansprüche 13 bis 15, **dadurch gekennzeichnet, dass** die Metallstreifen als oberflächenbehandelte Metallstreifen ausgebildet sind.

17. Bipolar- oder Elektrodenplatte nach einem der Ansprüche 13 bis 16, **dadurch gekennzeichnet, dass** die Metallstreifen gegen die Reaktionsmittel führenden Kunststoffkanäle isoliert ausgebildet sind.

18. Bipolar- oder Elektrodenplatte nach einem der Ansprüche 13 bis 17, **dadurch gekennzeichnet, dass** als Kunststoff Polyphenylensulfid (PPS) verwendet wird.

19. Bipolar- oder Elektrodenplatte nach einem der Ansprüche 13 bis 18, **dadurch gekennzeichnet, dass** ein Hochtemperaturkunststoff vorgesehen ist, der dauerhaft Temperaturen von 180 °C bis 260 °C aushält.

## Claims

1. A process for producing bipolar or electrode plates for fuel cell stacks or electrolyser stacks,
**characterised in that** the bipolar or electrode plate has at least one punched band and/or at least one blank, which is punched from a flat material made from a conductive and corrosion-resistant metal, having the process steps:
- cutting the flat material into strips in the punching process;
- pushing the strips out of a centre position;
- carrying out an injection-moulding procedure in such a way that the strips are held by plastics material,
- displacing the strips into their end position and injection-moulding partially around them, during the injection-moulding procedure.

2. A process according to Claim 1, **characterised in that** plastics material is injection-moulded around the at least one punched band and/or the at least one blank in such a way that channels for conducting reaction agents are formed by the plastics material.

3. A process according to one of the preceding claims, **characterised in that** only partial incisions are made in the strips during the punching procedure, and/or connecting webs are formed.

4. A process according to one of the preceding claims,
**characterised in that** the strips are brought into their end position by the injection-moulding pressure and/or by movable inserts (19, 20) of the injection-moulding die during the injection-moulding procedure.

5. A process according to one of the preceding claims, **characterised in that** channels for conducting the reaction agents are pre-formed or fully formed in a working region of the punched blanks or punched bands.

6. A process according to one of the preceding claims, **characterised in that** a surface treatment of the blanks or punched bands is carried out after the punching procedure and prior to the injection-moulding procedure.

7. A process for producing a stack of bipolar or electrode plates according to one of the preceding claims, **characterised in that** at least one membrane carrying gas diffusion layers is arranged between the blanks and/or punched bands.

8. A process according to one of the preceding claims, **characterised in that** the course of the channels is arranged parallel in a flow field between opposing plate planes so that in each case two metal strips, which lie opposite one another or are directed crosswise and are formed from the flat material and have plastics material partially injection-moulded around them, are arranged to abut with pressure on both sides of the membrane carrying the gas diffusion layer.

9. A process according to Claim 8, **characterised in that** a plastics frame with a seal is injection-moulded onto the punched bands and/or blanks.

10. A process according to one of Claims 7 to 9,
**characterised in that** the bipolar or electrode plates are arranged in a series connection and/or parallel connection in the stack.

11. A process according to one of Claims 7 to 10,
**characterised in that** the stack is constructed by arranging identical sections together, one section of an electrode plate having distributor channels and connections for the reaction agent and a membrane-electrode assembly (MEA), the membrane-electrode assembly of the n^{th} section forming the gas-tight and electrically insulating, yet proton-conductive, delimitation of the (n+1)^{th} section, and the membrane-electrode assembly of the (n+1)^{th} section forming the gas-tight and electrically insulating, proton-conductive delimitation of the (n+2)^{th} section (n = whole number).

12. A process according to one of Claims 7 to 10,
**characterised in that**, arranged at both ends of the electrode stack, there are end plates between which the individual sections arranged together with their seals are clamped, and which have connections for supplying and removing reaction agents.

13. A bipolar or electrode plate, **characterised in that** the bipolar or electrode plate has at least one punched band and/or at least one blank with strips of a punched flat material of a conductive and corrosion-resistant metal, contact faces with the anodes and cathodes being constructed such that they are displaced alternately to both sides from the original plane, and **in that** the at least one punched band or the at least one blank is constructed with plastics material injection-moulded at least partially around it, the plastics material forming channels for reaction agents.

14. A bipolar or electrode plate according to Claim 13, **characterised in that** the at least one punched band and/or the at least one blank is formed from stainless steel or copper with an anti-corrosive layer.

15. A bipolar or electrode plate according to one of Claims 13 and 14, **characterised in that** the punched bands and/or punched blanks have openings for conducting the reaction agents.

16. A bipolar or electrode plate according to one of Claims 13 to 15, **characterised in that** the metal strips are constructed as surface-treated metal strips.

17. A bipolar or electrode plate according to one of Claims 13 to 16, **characterised in that** the metal strips are constructed to be insulated against the plastics channels conducting the reaction agents.

18. A bipolar or electrode plate according to one of Claims 13 to 17, **characterised in that** polyphenylene sulphide (PPS) is used as the plastics material.

19. A bipolar or electrode plate according to one of Claims 13 to 18, **characterised in that** a high-temperature plastics material is provided, which continuously withstands temperatures of 180 °C to 260 °C.

## Revendications

1. Procédé de fabrication de plaques bipolaires ou d'électrodes pour empilements de piles à combustible ou d'électrolyseurs, **caractérisé en ce que** la plaque bipolaire ou d'électrodes présente au moins une bande d'emboutissage et/ou au moins une platine, qui est emboutie à partir d'un matériau plat d'un métal conducteur et résistant à la corrosion, comprenant les étapes de procédé suivantes :
- le matériau plat est coupé en forme de bandes dans le cadre du procédé d'emboutissage,
- les bandes sont poussées hors d'une position médiane,
- on réalise un processus d'injection de telle sorte que les bandes sont maintenues par une matière plastique,
- les bandes sont déplacées dans leur position terminale et partiellement entourées par injection pendant le processus d'injection.

2. Procédé selon la revendication 1, **caractérisé en ce que** l'au moins une bande d'emboutissage et/ou l'au moins une platine sont entourées par injection de matière plastique, de telle sorte que la matière plastique permet de configurer des canaux pour le guidage de réactifs.

3. Procédé selon l'une quelconque des revendications précédentes, **caractérisé en ce que** les bandes sont uniquement partiellement coupées pendant le processus d'emboutissage et/ou des traverses de liaison sont formées.

4. Procédé selon l'une quelconque des revendications précédentes, **caractérisé en ce que** les bandes sont amenées dans leur position terminale pendant le processus d'injection par la pression d'injection ou par des éléments mobiles (19, 20) de l'outil d'injection.

5. Procédé selon l'une quelconque des revendications précédentes, **caractérisé en ce que**, dans une zone de travail des platines embouties ou des bandes d'emboutissage, on préfabrique ou on fabrique des canaux pour le guidage des réactifs.

6. Procédé selon l'une quelconque des revendications précédentes, **caractérisé en ce que**, après le processus d'emboutissage et avant le processus d'injection, on réalise un traitement de surface des platines ou des bandes d'emboutissage.

7. Procédé de fabrication d'un empilement de plaques bipolaire ou d'électrode selon l'une quelconque des revendications précédentes, **caractérisé en ce qu'**au moins une membrane portant des couches de diffusion de gaz est disposée entre les platines et/ou les bandes d'emboutissage.

8. Procédé selon l'une quelconque des revendications précédentes, **caractérisé en ce que** le tracé des canaux est disposé parallèlement dans un champ d'écoulement entre des plans de plaque opposés, de telle sorte que deux bandes métalliques respectives opposées l'une à l'autre ou se croisant, configurées à partir du matériau plat et partiellement entourées par injection de matière plastique, sont disposées de manière à reposer sous pression sur les deux côtés de la membrane portant la couche de diffusion de gaz.

9. Procédé selon la revendication 8,
**caractérisé en ce qu'**un cadre en matière plastique avec un joint d'étanchéité est injecté au niveau des bandes d'emboutissage et/ou des platines.

10. Procédé selon l'une quelconque des revendications 7 à 9, **caractérisé en ce que** les plaques bipolaires ou d'électrodes sont disposées dans l'empilement en circuit parallèle et/ou en série.

11. Procédé selon l'une quelconque des revendications 7 à 10, **caractérisé en ce que** l'empilement est conçu en mettant bout à bout des sections identiques, une section d'une plaque d'électrode présentant des canaux de distribution ainsi que des raccords pour les réactifs et une unité membrane-électrodes, l'unité membrane-électrodes de la nième section formant la limitation étanche aux gaz et électriquement isolante, mais toutefois conductrice de protons de la (n+1)ième section tandis que l'unité membrane-électrodes de la (n+1)ième section forme la limitation conductrice de protons étanche aux gaz et électriquement isolante vers la (n+2)ième section (n = nombre entier).

12. Procédé selon l'une quelconque des revendications 7 à 10, **caractérisé en ce que**, au niveau des deux extrémités de l'empilement d'électrodes, sont disposées des plaques terminales, entre lesquelles sont serrées les sections individuelles mises bout à bout avec leurs joints d'étanchéité, et qui présentent des raccords pour l'amenée et l'évacuation des réactifs.

13. Plaque bipolaire ou d'électrodes, **caractérisée en ce que** la plaque bipolaire ou d'électrodes présente au moins une bande d'emboutissage et/ou au moins une platine avec des bandes constituées d'un matériau plat embouti d'un métal conducteur et résistant à la corrosion, des surfaces de contact vers les anodes ou les cathodes étant configurées alternativement décalées vers les deux côtés à partir du plan d'origine, et l'au moins une bande d'emboutissage ou l'au moins une platine est au moins partiellement configurée de manière à être entourée par injection de matière plastique, des canaux pour des réactifs étant configurés à travers la matière plastique.

14. Plaque bipolaire ou d'électrodes selon la revendication 13, **caractérisée en ce que** l'au moins une bande d'emboutissage et/ou l'au moins une platine sont configurées en acier inoxydable ou en cuivre avec une couche de protection contre la corrosion.

15. Plaque bipolaire ou d'électrodes selon l'une quelconque des revendications 13 ou 14, **caractérisée en ce que** les bandes d'emboutissage et/ou les platines embouties présentent des ouvertures pour le guidage des réactifs.

16. Plaque bipolaire ou d'électrodes selon l'une quelconque des revendications 13 à 15, **caractérisée en ce que** les bandes métalliques sont configurées sous forme de bandes métalliques ayant subi un traitement de surface.

17. Plaque bipolaire ou d'électrodes selon l'une quelconque des revendications 13 à 16, **caractérisée en ce que** les bandes métalliques sont configurées de manière à être isolées par rapport aux canaux de matière plastique conduisant les réactifs.

18. Plaque bipolaire ou d'électrodes selon l'une quelconque des revendications 13 à 17, **caractérisée en ce que** l'on utilise, en tant que matière plastique, du sulfure de polyphénylène (PPS).

19. Plaque bipolaire ou d'électrodes selon l'une quelconque des revendications 13 à 18, **caractérisée en ce qu'**on prévoit une matière plastique haute température qui résiste durablement à des températures de 180 °C à 260 °C.
